# EUROPEAN PATENT APPLICATION

(11) **EP 4 656 669 A1**
(43) Date of publication of application: **03.12.2025**
(21) Application number: 24305837.7
(22) Date of filing: 28.05.2024
(51) Int. Cl.: C08G 73/02, C08L 79/02, C08L 27/16

(54) **FLUORINATED COPOLYMERS BASED ON AN OLIGO(2-OXAZOLINE) MACROMONOMER**

(71) Applicant: ARKEMA FRANCE, 92800 Puteaux (FR); Centre National de la Recherche Scientifique, 75016 Paris (FR); UNIVERSITE DE MONTPELLIER, 34090 Montpellier (FR); Ecole Nationale Supérieure de Chimie de Montpellier, 34090 Montpellier (FR)
(72) Inventor: ÖZKÖSE, Umut Ugur, 34293 Montpellier (FR); AMEDURI, Bruno, 34293 Montpellier (FR); EID, Nadim, 69491 Pierre-Bénite (FR); BONNET, Anthony, 92700 Colombes (FR); DEVISME, Samuel, 27470 Serquigny (FR)
(74) Representative: Bandpay & Greuter

(57) **Abstract**

The invention relates to a compound of formula (I), wherein said formula (I) is as follows: 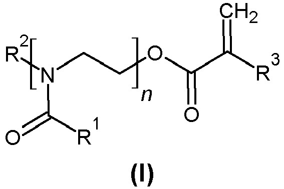 wherein R¹ is selected from the group consisting of: linear, branched and cyclic alkyl groups; aromatic groups; linear, branched and cyclic alkenyl groups;
wherein R² is selected from the group consisting of: linear, branched and cyclic alkyl groups with or without one or more substituents; linear, branched and cyclic alkenyl groups with or without one or more substituents; linear, branched and cyclic alkynyl groups with or without one or more substituents;
the substituents being selected from halogen atoms; aromatic groups; heterocyclic groups; carboxylic acid groups; amide-containing groups; ester-containing groups; and ether-containing groups;
wherein R³ is selected from the group consisting of: hydrogen, halogens and partially or fully halogenated alkyl groups;
wherein n is at least 1.

The invention also relates to polymers made from this compound and other monomers.

## Description

### Technical field

The present invention relates to a compound of formula (I) as described in detail below, said compound of formula (I) being an oligo(2-oxazoline) macromonomer with a reactive chain end, as well as a method for preparing said compound. The present invention also relates to the polymerization of the oligo(2-oxazoline) macromonomer with at least one ethylenically unsaturated monomer (including preferably VDF, *i.e.,* vinylidene fluoride) and the obtained polymer.

### Technical background

In lithium-based batteries, such as lithium-ion batteries, use is made of polymers in various applications.

As one example, a polymer can be used as a binder which serves to hold together the active materials, such as lithium compounds, and conductive additives, forming a stable electrode structure. It helps to maintain the integrity of the electrode during charging and discharging cycles. Common binder materials include polyvinylidene fluoride (PVDF), carboxymethyl cellulose (CMC), and styrene-butadiene rubber (SBR). The binder not only provides mechanical support but also ensures good electrical contact between the active materials and the current collector, facilitating efficient electron transfer during battery operation. Proper selection and optimization of the binder material are essential for achieving high-performance lithium batteries with good cycling stability and energy efficiency.

As another example, polymers can be used to make a separator, which is a permeable membrane that physically separates the positive and negative electrodes of the battery. The separator may comprise a coating, which has several important purposes such as enhanced safety, electrolyte management, prevention of dendrite formation and improved cycling stability.

Polymers may also be included in the electrolyte.

Functional PVDF are materials with interesting properties. The polymer functionality can enhance performances such as peel and mechanic strength. As an example, PVDF functionalized with maleic anhydride or polyacrylic acid gained importance in separator coating applications for lithium-ion batteries. The presence of the acid functionality provides a desired peel strength with the active materials. Only few fluorinated co-monomers can react efficiently with VDF leading to satisfactory incorporation percentages, such as hexafluoropropene (HFP), chlorotrifluoroethylene (CTFE); 1,2-difluoroethylene; tetrafluoroethylene (TFE); perfluoro(alkyl vinyl)ethers such as perfluoro(methyl vinyl)ether (PMVE), perfluoro(ethyl vinyl)ether (PEVE), perfluoro(propylvinyl)ether (PPVE), 3,3,3-trifluoropropene, tetrafluoropropene (especially 1,3,3,3-tetrafluoropropene or 2,3,3,3-tetrafluoropropene); hexafluoroisobutylene; perfluorobutylethylene; pentafluoropropene (especially 1,2,3,3,3-pentafluoropropene or 1,1,3,3,3-pentafluoropropene), bromotrifluoroethylene, 1,1-chlorofluoroethylene, 1,2-chlorofluoroethylene, chlorotrifluoropropene and 2-trifluoromethyl-3,3,3-trifluoro-1-propene, and 2-trifluoromethyl acrylic acid (MAF) and alkyl trifluoromethyl acrylate. However, except MAF, these co-monomers do not have any functionality (carboxylic acid, sulfonic acid, phosphonic acid, alcohol, etc.), which is desirable to promote some application properties such as adhesion.

Poly(oxazoline) (POx) has also been suggested as a material of interest in lithium-based batteries.

For example, the research article *"*Two routes for N-rich solid polymer electrolyte for all-solid-state lithium-ion batteries", L. Artigues et al., Solid State Ionics 388:116086 (2022) relates to the preparation of solid polymer electrolytes for all-solid-state lithium-ion batteries based on nitrogen-rich polymers, especially poly(ethyleneimine) (PEI) and poly(oxazoline) (POx).

The research article *"*Poly(Ethylene Glycol-block-2-Ethyl-2-Oxazoline) as Cathode Binder in Lithium-Sulfur Batteries" Y.-C. Chien et al., ChemistryOpen 10:1-7 (2021), relates to the use of Pox as cathode binder in lithium-sulfur batteries.

Merely by way of background information, the following documents can also be mentioned:
- *"*Poly(2-oxazoline)s: A Polymer Class with Numerous Potential Applications", R. Hoogenboom, Angew. Chem. Int. Ed. 48:7978-7994 (2009);
- *"*Screening the Synthesis of 2-Substituted-2-oxazolines", K. Kempe et al., J. Comb. Chem. 11:274-280 (2009);
- US 2010/0069579 A1;
- *"*Chemistry of 2-Oxazolines: A Crossing of Cationic Ring-Opening Polymerization and Enzymatic Ring-Opening Polyaddition", A. Makino et al., Journal of Polymer Science: Part A: Polymer Chemistry 48:1251-1270 (2010);
- *"*Dual Responsive Methacrylic Acid and Oligo(2-ethyl-2-oxazoline) Containing Graft Copolymers", C. Weber et al., Macromolecules, 43:160-167 (2010);
- *"*How to Modulate the Chemical Structure of Polyoxazolines by Appropriate Functionalization", B. Guillerm et al., Macromol. Rapid Commun. 33:1600-1612 (2012);
- *"*First Symposium on Poly(2-oxazoline)s and Related Pseudo-Polypeptide Structures", V. R. De La Rosa et al., Macromol. Chem. Phys. 213:2669-2673 (2012);
- *"*Poly(2-Oxazoline)s - Are They More Advantageous for Biomedical Applications Than Other Polymers?", O. Sedlacek et al., Macromol. Rapid Commun. 33:1648-1662 (2012);
- *"*In-situ preparation of poly(2-ethyl-2-oxazoline)/clay nanocomposites via living cationic ring-opening polymerization", U.U. Ozkose et al., European Polymer Journal, 88 :586-593 (2017);
- *"*Synthetic approaches on conjugation of poly(2-oxazoline)s with vinyl based polymers", B.A. Drain et al., European Polymer Journal 119:344-351 (2019);
- *"*Development of self-assembled poly(2-ethyl-2-oxazoline)-b-poly(ε-caprolactone) (PetOx-b-PCL) copolymeric nanostructures in aqueous solution and evaluation of their morphological transitions", U.U. Ozkose et al., eXPRESS Polymer Letters, 14:1048-1062 (2020);
- *"*Poly(2-oxazoline)-based stimulus-responsive (Co)polymers: An overview of their design, solution properties, surface-chemistries and applications" S. Jana et al., Progress in Polymer Science 106:101252 (2020);
- *"*Copolymers of vinylidene fluoride with functional comonomers and applications therefrom: Recent developments, challenges and future trends", B. Ameduri, Progress in Polymer Science 133:101591 (2022);

Within this context, there is a need to synthesize polymers (such as for example PVDF-based polymers) displaying a broader range of chemical functionalization and for example which may be able to efficiently conduct lithium ions. Said polymers may for example serve to make more efficient binders separator coatings, or electrolyte components in lithium-based batteries.

### Summary of the invention

The invention relates to a compound of formula (I), wherein said formula (I) is as follows: 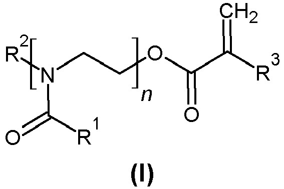
wherein R¹ is selected from the group consisting of: linear, branched and cyclic alkyl groups; aromatic groups; linear, branched and cyclic alkenyl groups;
wherein R² is selected from the group consisting of: linear, branched and cyclic alkyl groups with or without one or more substituents; linear, branched and cyclic alkenyl groups with or without one or more substituents; linear, branched and cyclic alkynyl groups with or without one or more substituents;
the substituents being selected from halogen atoms; aromatic groups; heterocyclic groups; carboxylic acid groups; amide-containing groups; ester-containing groups; and ether-containing groups;
wherein R³ is selected from the group consisting of: hydrogen, halogens and partially or fully halogenated alkyl groups;
wherein n is at least 1.

In some embodiments, R¹ is a methyl group, an ethyl group, a propyl group, an isopropyl group or a *n*-butyl group.

In some embodiments, R² is a methyl group, an allyl group, a propargyl group, a benzyl group, a perfluoroalkyl group, or an alkylepoxide group.

In some embodiments, R³ is fluorine, a perfluoroalkyl having 1 to 8 carbon atoms, or CCl₃.

In some embodiments, the compound of formula (I) has a molar mass from 200 to 25000 g/mol, more preferably from 210 to 20000 g/mol, even more preferably from 220 to 15000 g/mol, even more preferably from 230 to 10000 g/mol, even more preferably from 240 to 7500 g/mol, and most preferably from 250 to 5000 g/mol.

In some embodiments, n is from 1 to 500, preferably from 2 to 400, more preferably from 3 to 300, even preferably from 4 to 200 and most preferably from 5 to 100.

The invention also relates to a method for preparing the compound of formula (I) as defined above, comprising:
- an initiation reaction between an oxazoline of formula (II) and an initiator of formula R²-X to obtain an intermediate compound; 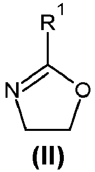 wherein X is selected from the group consisting of halogens such as Cl, Br or I and sulfonyls such as tosyl, brosyl, nosyl, mesyl or triflyl;
- a termination reaction between the intermediate compound and a terminating agent of formula (III) to obtain the compound of formula (I), 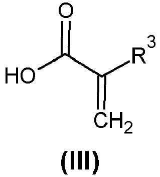 wherein R¹, R², and R³ are as defined above.

In some embodiments, the oxazoline of formula (II) is selected from the group of 2-methyl-2-oxazoline, 2-ethyl-2-oxazoline, 2-butyl-2-oxazoline, 2-isopropyl-2-oxazoline or 2-phenyl-2-oxazoline.

In some embodiments, the initiator of formula R²-X is selected from the group consisting of: methyl *p*-toluenesulfonate, allyl *p*-toluenesulfonate, allyl bromide, propargyl *p*-toluenesulfonate, propargyl bromide, benzyl *p-*toluenesulfonate, 2-oxiranylmethyl trifluoromethanesulfonate or (2,2-dimethyl-1,3-dioxolan-4-yl)methyl trifluoromethanesulfonate.

In some embodiments, the terminating agent of formula (III) is selected from the group consisting of: acrylic acid and its derivatives, for example, 2-fluoroacrylic acid, methacrylic acid, 2-(trichloromethyl)acrylic acid, 2-(trifluoromethyl)acrylic acid, 2-(difluoromethyl)acrylic acid, 2-(monofluoromethyl)acrylic acid, 3,3,4,4,4-pentafluoro-2-methylenebutanoic acid; and preferably the terminating agent of formula (III) is 2-(trifluoromethyl)acrylic acid.

The invention also relates to a polymer comprising:
- a first repeat unit derived from a monomer which is a compound of formula (I) as defined above,
- one or more further repeat units, each further repeat unit being derived from an ethylenically unsaturated monomer.

In some embodiments, the one or more further repeat units are derived from VDF and optionally derived from a monomer M1' and/or derived from a monomer M1", wherein:
monomer M1' is selected from the group consisting of: vinyl fluoride; trifluoroethylene (VF₃); chlorotrifluoroethylene (CTFE); 1,2-difluoroethylene; tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE), perfluoro(propylvinyl)ether (PPVE), perfluoro(1,3-dioxole), perfluoro(2,2-dimethyl-1,3-dioxole) (PDD); compounds of formula CF₂=CFOCF₂CF(CF₃)OCF₂CF₂X in which X is SO₂F, CO₂H, CH₂OH, CH₂OCN or CH₂PO₃H; the compound of formula CF₂=CFOCF₂CF₂SO₂F; the compound of formula F(CF₂)_{b}CH₂OCF=CF₂ in which b is 1, 2, 3, 4 or 5; the compound of formula R⁴CH₂OCF=CF₂ in which R⁴ is hydrogen or F(CF₂)_{c} and c is 1, 2, 3 or 4; the compound of formula R⁵OCF=CH₂ in which R⁵ is F(CF₂)_{d} and d is 1, 2, 3 or 4; perfluorobutyl ethylene (PFBE); 3,3,3-trifluoropropene; 2,3,3,3-tetrafluoropropene; hexafluoroisobutylene; perfluorobutylethylene; pentafluoropropene, bromotrifluoroethylene, chlorofluoroethylene, chlorotrifluoropropene and 2-trifluoromethyl-3,3,3-trifluoro-1-propene and combinations thereof;
monomer M1" is selected from the group consisting of: R⁶R⁷C=C(R⁸)C(O)R⁹ in which R⁶, R⁷ and R⁸ are independently selected from the group consisting of: H and C1-C5 alkyl groups; R⁹ is selected from the group consisting of: -NHC(CH₃)₂CH₂C(O)CH₃ or -OR^{9'} with R^{9'} being selected from the group consisting of: H and C1-C18 alkyl groups optionally substituted by one or more of -OH, -CO₂H, -SO₃H, -POsH, -OC(O)R¹⁰, -C(O)O-R¹⁰ groups or a 5 to 10 membered heterocycle ring comprising at least one nitrogen atom, R¹⁰ being selected from the group consisting of: C1-C6 alkyl groups or C6-C12 aryl groups, optionally substituted by one or more of -OH, -CO₂H, -SO₃H, -POsH groups.

In some embodiments, the polymer comprises:
- from 1 to 50 mol.% of the first repeat unit;
- from 50 % to 99 mol.% of the one or more further repeat units.

The invention also relates to a method for preparing the polymer as defined above, comprising polymerizing the compound of formula (I) as defined above and the one or more ethylenically unsaturated monomers, the method preferably comprising:
- a first step of bringing the compound of formula (I) as defined above and a polymer initiator into contact;
- a second step of adding the one or more ethylenically unsaturated monomers.

The invention also relates to the use of the polymer as defined above as a coating agent, as an electroactive material, or as antifouling, fouling release or antimicrobial material, notably for surface modification of reverse osmosis and nanofiltration membranes, as a binder for an electrode, as an electrolyte component, or as a separator material in a battery cell.

The invention makes it possible to address the needs expressed above.

The synthesis of the oligo(2-oxazoline) macromonomer from various initiators and terminating agents and especially MAF allows for a high chemical diversity and a reactive chain-end. The copolymerization of the oligo(2-oxazoline) macromonomer with a variety of ethylenically unsaturated monomer allows the synthesis of highly diversified polymers, in particular PVDF-based polymers, without post-functionalization reactions.

In particular, such polymers may have improved properties of conduction of lithium ions in lithium-ion batteries.

### Brief description of the drawings

Non-limiting examples will now be described in reference to the accompanying drawings, where:
Figure 1 represents a ¹H-NMR spectrum of compound of formula (I) according to example 1.
Figure 2 represents a ¹⁹F-NMR spectrum of compound of formula (I) according to example 1.
Figure 3 represents a ¹H-NMR spectrum of a polymer according to example 3.
Figure 4 represents a ¹⁹F-NMR spectrum of a polymer according to example 3.

### Detailed description

The invention will now be described in more detail without limitation in the following description.

### Compound of formula (I)

The compound of formula (I) is an oligo(2-oxazoline) macromonomer.

The compound of formula (I) displays a reactive chain-end. By reactive chain-end is meant the free ethylene group neighboring the R³ group. The reactive chain-end of the compound of formula (I) may polymerize or react with a ethylenically unsaturated monomers.

Formula (I) is the following: 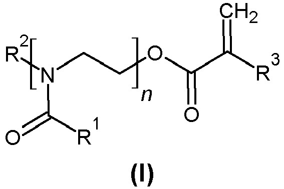
wherein R¹ is selected from the group consisting of: linear, branched and cyclic alkyl groups; aromatic groups; linear, branched and cyclic alkenyl groups;
wherein R² is selected from the group consisting of: linear, branched and cyclic alkyl groups with or without one or more substituents; linear, branched and cyclic alkenyl groups with or without one or more substituents; linear, branched and cyclic alkynyl groups with or without one or more substituents;
the substituents being selected from halogen atoms; aromatic groups; heterocyclic groups; carboxylic acid groups; amide-containing groups; ester-containing groups; and ether-containing groups;
wherein R³ is selected from the group consisting of: hydrogen, halogens and partially or fully halogenated alkyl groups;
wherein n is at least 1.

The R¹ group may in particular be a C1-C50, preferably C1-C40, more preferably C1-C30, even more preferably C1-C20, most preferably C1-C10 linear alkyl group, including but not limited to methyl, ethyl, *n*-propyl, *n*-butyl, *n*-pentyl, *n*-hexyl, *n*-heptyl, *n*-octyl, *n*-nonyl, and *n*-decyl.

The R¹ group may also be a C1-C50, preferably C1-C40, more preferably C1-C30, even more preferably C1-C20, most preferably C1-C10 branched alkyl group, including but not limited to isopropyl, isobutyl, sec-butyl, *tert*-butyl, neopentyl, isoamyl, cyclohexylmethyl, *tert*-pentyl, and isooctyl.

The R¹ group may also be a C1-C50, preferably C1-C40, more preferably C1-C30, even more preferably C1-C20, most preferably C1-C10 cyclic alkyl group, including but not limited to cyclopropyl, cyclobutyl, cyclopentyl, cyclohexyl, cycloheptyl, cyclooctyl, cyclononyl, cyclodecyl, cycloundecyl, and cyclododecyl.

The R¹ group may also be a C1-C50, preferably C1-C40, more preferably C1-C30, even more preferably C1-C20, most preferably C1-C10 linear alkenyl group, including but not limited to vinyl, allyl, 1-butenyl, 2-butenyl, 1-pentenyl, 2-pentenyl, 3-pentenyl, 1-hexenyl, 2-hexenyl, and 3-hexenyl.

The R¹ group may also be a C1-C50, preferably C1-C40, more preferably C1-C30, even more preferably C1-C20, most preferably C1-C10 branched alkenyl group, including but not limited to isopropenyl, sec-butenyl, tert-butenyl, isobutenyl, isoamylvinyl, neopentenyl, isooctenyl, tert-pentenyl, isodecylvinyl, and tert-hexenyl.

The R¹ group may also be a C1-C50, preferably C1-C40, more preferably C1-C30, even more preferably C1-C20, most preferably C1-C10 cyclic alkenyl group, including but not limited to cyclopropenyl, cyclobutenyl, cyclopentenyl, cyclohexenyl, cycloheptenyl, cyclooctenyl, cyclononenyl, cyclodecenyl, cycloundecenyl, and cyclododecenyl.

Preferably R¹ is a methyl group, an ethyl group, a propyl group, an isopropyl group or a *n*-butyl group. Most preferably, R¹ is a methyl or ethyl group.

Preferably, all R¹ groups within the compound of formula (I) are the same. Alternatively, in some variations, the compound of formula (I) may comprise two or more different R¹ groups.

Preferably, -R² is -CH₂-R^{2'}, wherein R^{2'} is selected from the group consisting of: linear, branched and cyclic alkyl groups with or without one or more substituents; linear, branched and cyclic alkenyl groups with or without one or more substituents; linear, branched and cyclic alkynyl groups with or without one or more substituents.

The R² group may be a C1-C50, preferably C1-C40, more preferably in C1-C30, even more preferably C1-C20, most preferably C1-C10 linear, branched or cyclic alkyl group, including but not limited to methyl, ethyl, n-propyl, n-butyl, n-pentyl, n-hexyl, n-heptyl, n-octyl, n-nonyl, n-decyl, isopropyl, isobutyl, sec-butyl, tert-butyl, neopentyl, isoamyl, cyclohexylmethyl, tert-pentyl, isooctyl, cyclopropyl, cyclobutyl, cyclopentyl, cyclohexyl, cycloheptyl, cyclooctyl, cyclononyl, cyclodecyl, cycloundecyl, and cyclododecyl, with or without one or more substituents.

The R² group may be a C2-C50, preferably C2-C40, more preferably C2-C30, even more preferably C2-C20, most preferably C2-C10 linear, branched or cyclic alkenyl group including but not limited to vinyl, allyl, 1-butenyl, 2-butenyl, 1-pentenyl, 2-pentenyl, 3-pentenyl, 1-hexenyl, 2-hexenyl, 3-hexenyl, isopropenyl, sec-butenyl, tert-butenyl, isobutenyl, isoamylvinyl, neopentenyl, isooctenyl, tert-pentenyl, isodecylvinyl, tert-hexenyl, cyclopropenyl, cyclobutenyl, cyclopentenyl, cyclohexenyl, cycloheptenyl, cyclooctenyl, cyclononenyl, cyclodecenyl, cycloundecenyl, and cyclododecenyl with or without one or more substituents.

The R² group may be a C2-C50, preferably C2-C40, more preferably C2-C30, even more preferably C2-C20, most preferably C2-C10 linear, branched and cyclic alkynyl group, including but not limited to ethynyl, propargyl, butynyl, pentynyl, hexynyl, heptynyl, octynyl, nonynyl, decynyl, undecynyl, isopropargyl, sec-butynyl, tert-butynyl, isobutynyl, isoamylpropargyl, neopentynyl, isooctynyl, tert-pentynyl, isodecylpropargyl, tert-hexynyl, cyclopropynyl, cyclobutynyl, cyclopentynyl, cyclohexynyl, cycloheptynyl, cyclooctynyl, cyclononynyl, cyclodecynyl, cycloundecynyl, and cyclododecynyl, with or without one or more substituents.

The R² group may comprise one or more substituents (each substituent replacing a hydrogen atom) selected from halogen atoms; aromatic groups; heterocyclic groups; carboxylic acid groups; amide-containing groups; ester-containing groups; ether-containing groups; and combinations thereof.

The halogen atoms may be Cl, Br, I or F and combinations thereof.

The aromatic groups may include but are not limited to phenyl, naphthalene, anthracene, phenanthrene, benzyl, tolyl, xylyl or biphenyl. The aromatic groups may be unsubstituted, or they may themselves be substituted with one or more substituents as described herein.

The heterocyclic groups may include but are not limited to pyridyl, pyrrolyl, furanyl, thiophenyl, imidazolyl, oxazolyl, thiazolyl, pyrazolyl, indolyl, quinolinyl, isoquinolinyl, benzofuranyl, benzothiophenyl, morpholinyl, or piperidinyl. The heterocyclic groups may be unsubstituted, or they may themselves be substituted with one or more substituents as described herein.

The carboxylic acid groups may be linear, branched or cyclic, preferably linear, and may include but are not limited to C1-C50, preferably C1-C40, more preferably C1-C30, even more preferably C1-C20, most preferably C1-C10 carboxylic acids. The carboxylic acid groups may be unsubstituted, or they may themselves be substituted with one or more substituents as described herein.

The ester-containing groups may be linear or cyclic and may include but are not limited to C1-C50, preferably C1-C40, more preferably C1-C30, even more preferably C1-C20, most preferably C1-C10 ester-containing groups. They may include but are not limited to ethylene carbonate and lactones such as γ-butyrolactone, δ-valerolactone, ε-caprolactone, γ-decalactone, γ-undecalactone, δ-dodecalactone, δ-tridecalactone, δ-tetradecalactone or ε-pentadecalactone. The ester-containing groups may be unsubstituted, or they may themselves be substituted with one or more substituents as described herein.

The ether-containing groups may be linear, branched or cyclic and may include but are not limited to C1-C50, preferably C1-C40, more preferably C1-C30, even more preferably C1-C20, most preferably C1-C10 ether-containing groups. They may include but are not limited to epoxide groups, oxetane or tetrahydrofuran.

The amide-containing groups may be linear, branched or cyclic and may include but are not limited to C1-C50, preferably C1-C40, more preferably C1-C30, even more preferably C1-C20, most preferably C1-C10 amide-containing groups.

Preferably, R² is selected from a methyl group, an allyl group, a propargyl group, a benzyl group, a perfluoroalkyl group, or an alkylepoxide group. The perfluoroalkyl group is preferably a C1-C10 perfluoroalkyl. The alkylepoxide group is preferably a C1-C10 alkylepoxide.

Preferably, R³ is fluorine, a perfluoroalkyl or perchloroalkyl group; more preferably R³ is fluorine, a C1, C2, C3, C4, C5, C6, C7 or C8 perfluoroalkyl group, or CCl₃.

The compound of formula (I) may have a molar mass from 200 to 25000 g/mol, more preferably from 210 to 20000 g/mol, even more preferably from 220 to 15000 g/mol, even more preferably from 230 to 10000 g/mol, even more preferably from 240 to 7500 g/mol, and most preferably from 250 to 5000 g/mol.

The compound of formula (I) may have a molar mass ranging from 200 to 250 g/mol, from 250 to 500 g/mol, from 500 to 750 g/mol, from 750 to 1000 g/mol, from 1000 to 1250 g/mol, from 1250 to 1500 g/mol, from 1500 to 1750 g/mol, from 1750 to 2000 g/mol, from 2000 to 2250 g/mol, from 2250 to 2500 g/mol, from 2500 to 2750 g/mol, from 2750 to 3000 g/mol, from 3000 to 3250 g/mol, from 3250 to 3500 g/mol, from 3500 to 3750 g/mol, from 3750 to 4000 g/mol, from 4000 to 4250 g/mol, from 4250 to 4500 g/mol, from 4500 to 4750 g/mol, from 4750 to 5000 g/mol, from 5000 to 7500 g/mol, from 7500 to 10000 g/mol, from 10000 to 12500 g/mol, from 12500 to 15000 g/mol, from 15000 to 17500 g/mol, from 17500 to 20000 g/mol, from 20000 to 22500 g/mol, from 22500 to 25000 g/mol.

In formula (I), n may vary from 1 to 500, preferably from 2 to 400, more preferably from 3 to 300, even more preferably from 4 to 200 and most preferably from 5 to 100.

For example, n may vary from 1 to 25, from 25 to 50, from 50 to 75, from 75 to 100, from 100 to 125, from 125 to 150, from 150 to 175, from 175 to 200, from 200 to 225, from 225 to 250, from 250 to 275, from 275 to 300, from 300 to 325, from 325 to 350, from 350 to 375, from 375 to 400, from 400 to 425, from 425 to 450, from 450 to 475, and from 475 to 500.

In some cases, within the compound of formula (I), substantially all molecules have the same value of n. In other cases, the compound of formula (I) is characterized by a statistical distribution of n. In such cases, the above values correspond to the weight-average value of n; and the molar mass is to be understood as the weight-average molar mass.

### Preparation of the compound of formula (I)

The method for preparing the compound of formula (I) may comprise:
- an initiation reaction between an oxazoline of formula (II) and an initiator of formula R²-X to obtain an intermediate compound; 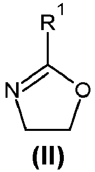 wherein X is selected from the group consisting of halogens such as C!, Br or I and sulfonyls such as tosyl, brosyl, nosyl, mesyl or triflyl;
- a termination reaction between the intermediate compound and a terminating agent of formula (III) to obtain the compound of formula (I); 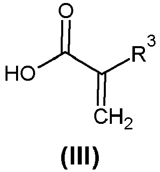 wherein R¹, R², and R³ are as defined above.

The initiation reaction may be a cationic ring-opening polymerization. The intermediate compound may comprise an oxazolinium cation in its terminal position. The terminating agent of formula (III) may react with the oxazolinium moiety of the intermediate compound.

The initiation reaction is carried out before the termination reaction. For example, the oxazoline of formula (II) and an initiator of formula R²-X may be brought into contact in a reaction medium and reacted, and then the terminating agent of formula (III) may be added to the reaction medium. Alternatively, the intermediate compound may be isolated and/or purified from the reaction medium and then brought into contact and reacted with the terminating agent of formula (III) in another reaction medium.

The initiator of formula R²-X may be for example methyl p-toluenesulfonate, allyl p-toluenesulfonate, allyl bromide, propargyl p-toluenesulfonate, propargyl bromide, benzyl p-toluenesulfonate, 2-oxiranylmethyl trifluoromethanesulfonate or (2,2-dimethyl-1,3-dioxolan-4-yl)methyl trifluoromethanesulfonate.

The oxazoline of formula (II) may be for example 2-methyl-2-oxazoline, 2-ethyl-2-oxazoline, 2-butyl-2-oxazoline, 2-isopropyl-2-oxazoline or 2-phenyl-2-oxazoline.

In the initiation reaction, the relative amount of the oxazoline of formula (II) to the initiator of formula R²-X may be from 50 to 5000 mol. %, preferably from 100 to 4000 mol. %, more preferably from 150 to 3000 mol. %, even more preferably from 200 to 2000 mol. % and most preferably from 250 to 1000 mol. %.

The oxazoline of formula (II) and the initiator of formula R²-X may be brought into contact in an initiation reaction medium.

The initiation reaction medium may further comprise a solvent, preferably a polar aprotic solvent.

By *"polar"* is meant a molecule that has a dipole moment equal to or higher than 1.5 D at 25°C, and preferably equal to or higher than 3 D, or 4 D, or 4.5 D, or 5 D at 25°C. The dipole moment can be measured by using a dipole meter and by interpretation of the results using the Debye Huckel equation.

By *"aprotic"* is meant a molecule which does not contain any acidic hydrogen and thus does not act as a hydrogen bond donor. In particular, the aprotic molecule is free of -OH, -NH, -SH, and -PH groups.

The solvent may be for example selected from acetonitrile, butyronitrile, dimethyl sulfoxide (DMSO), Dimethylformamide (DMF), ethyl acetate, tetrahydrofuran (THF), dichloromethane (DCM), acetone, hexamethylphosphoramide (HMPA), N,N-dimethylacetamide (DMA) or ethyl acetate. Preferably the solvent is acetonitrile.

The initiation reaction medium may comprise an amount of solvent such that the volume ratio of 2-oxazoline of formula (II)-to-solvent is for example from 1:1 to 1:10, preferably from 1:2 to 1:5, and more preferably approximately 1:3.

The initiation reaction medium may be subjected to microwave irradiation, and/or to heating by using *e.g.* an oil bath.

The initiation reaction may be carried out at a temperature from 25 to 250 °C, preferably from 50 to 200 °C, and more preferably from 75 to 175 °C.

The initiation reaction may be carried for a duration comprised from 1 to 300 minutes, preferably from 15 to 240 minutes and more preferably from 30 to 180 minutes.

The terminating agent of formula (III) may be for example selected from the group consisting of: acrylic acid and its derivatives, for example, 2-fluoroacrylic acid, methacrylic acid, 2-(trichloromethyl)acrylic acid, 2-(trifluoromethyl)acrylic acid, alkyl 2-(trifluoromethyl)acrylate 2-(difluoromethyl)acrylic acid, 2-(monofluoromethyl)acrylic acid, and 3,3,4,4,4-pentafluoro-2-methylenebutanoic acid. Preferably, the terminating agent of formula (III) is 2-(trifluoromethyl)acrylic acid.

In the termination reaction, the relative amount of the terminating agent of formula (III) relative to the initiator of formula R²-X (as used in the initiation reaction) may be from 25 to 2500 mol. %, preferably from 50 to 2000 mol. %, more preferably from 75 to 1500 mol. % and most preferably from 100 to 1000 mol. %.

In the termination reaction, an additive may also be added such as a primary, secondary or tertiary amine for example, trimethylamine, triethylamine, N,N-dimethylaniline, N,N-dimethylformamide (DMF), N,N-dimethylacetamide (DMA), N,N-diisopropylethylamine (DIPEA), triisopropylamine, tri-n-butylamine or triphenylamine. Preferably the additive is triethylamine. The additive may serve as a nucleophile to catalyze the termination of the reaction.

The relative amount of the additive relative to the initiator of formula R²-X (as used in the initiation reaction) may be from 20 to 1000 mol. %, preferably from 50 to 750 mol. %, and more preferably from 75 to 500 mol. %.

The termination reaction may be carried out at a temperature from 25 to 200°C, preferably from 40 to 150 °C, and more preferably from 50 to 125 °C.

The termination reaction may be carried for a duration from 15 minutes to 30 hours, preferably from 30 minutes to 25 hours and more preferably from 45 minutes to 20 hours.

Advantageously, microwave irradiation may be carried out to shorten the reaction time.

Once the termination reaction is completed, the reaction medium can be cooled and the obtained product can be concentrated, isolated and/or purified. By way of example, the product can be concentrated, dissolved in a solvent (such as dichloromethane or any other equivalent solvent), washed with an aqueous solution (for example a saturated sodium hydrogen carbonate and brine solution) and the organic phase may be dried (in the presence of MgSO₄, for example), concentrated and precipitated (for example using chilled diethylether) and then again dried.

### Polymer based on the compound of formula (I)

The polymer according to the invention is a copolymer obtained by copolymerizing the oligo(2-oxazoline) macromonomer described above with one or more ethylenically unsaturated monomers. By *"ethylenically unsaturated monomer"* is meant a compound (other than a compound of formula (I)) comprising a C=C double bond.

In some variations, at least one ethylenically unsaturated monomer is an acrylic monomer, such as a (meth)acrylate monomer.

Preferably, at least one ethylenically unsaturated monomer is a fluorinated monomer.

Most preferably, VDF is used as one (or the single) ethylenically unsaturated monomer.

The polymer comprises:
- a first repeat unit derived from a monomer which is a compound of formula (I);
- one or further repeat units, each further repeat unit being derived from an ethylenically unsaturated monomer.

In some variations, the polymer may consist of the first repeat unit and a further repeat unit derived from VDF. In some variations, the polymer may comprise (or consist of) the first repeat unit, a further repeat unit derived from VDF, and a further repeat unit derived from another fluorinated ethylenically unsaturated monomer.

In some variations, the polymer may comprise (or consist of) the first repeat unit, a further repeat unit derived from VDF, and a further repeat unit derived from an acrylic monomer.

In some variations, the polymer may comprise (or consist of) the first repeat unit, a further repeat unit derived from VDF, a further repeat unit derived from another fluorinated ethylenically unsaturated monomer and a further repeat unit derived from an acrylic monomer.

More specifically, the polymer may comprise one or more further repeat units derived from VDF and optionally derived from a monomer M1' and/or derived from a monomer M1", wherein:
- M1' is selected from the group consisting of: vinyl fluoride; trifluoroethylene (VF₃); chlorotrifluoroethylene (CTFE); 1,2-difluoroethylene; tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE), perfluoro(propylvinyl)ether (PPVE), perfluoro(1,3-dioxole), perfluoro(2,2-dimethyl-1,3-dioxole) (PDD); compounds of formula CF₂=CFOCF₂CF(CF₃)OCF₂CF₂X in which X is SO₂F, CO₂H, CH₂OH, CH₂OCN or CH₂PO₃H; the compound of formula CF₂=CFOCF₂CF₂SO₂F; the compound of formula F(CF₂)_{b}CH₂OCF=CF₂ in which b is 1, 2, 3, 4 or 5; the compound of formula R⁴CH₂OCF=CF₂ in which R⁴ is hydrogen or F(CF₂)_{c} and c is 1, 2, 3 or 4; the compound of formula R⁵OCF=CH₂ in which R⁵ is F(CF₂)_{d} and d is 1, 2, 3 or 4; perfluorobutyl ethylene (PFBE); trifluoropropene (especially 3,3,3-trifluoropropene); tetrafluoropropene (especially 1,3,3,3-tetrafluoropropene or 2,3,3,3-tetrafluoropropene); hexafluoroisobutylene; perfluorobutylethylene; pentafluoropropene (especially 1,2,3,3,3-pentafluoropropene or 1,1,3,3,3-pentafluoropropene), bromotrifluoroethylene, 1,1-chlorofluoroethylene, 1,2-chlorofluoroethylene, chlorotrifluoropropene and 2-trifluoromethyl-3,3,3-trifluoro-1-propene, and combinations thereof;
- monomer M1" is selected from the group consisting of: R⁶R⁷C=C(R⁸)C(O)R⁹ in which R⁶, R⁷ and R⁸ are, independently, selected from the group consisting of: H and C1-C5 alkyl groups; R⁹ is selected from the group consisting of: -NHC(CH₃)₂CH₂C(O)CH₃ or -OR^{9'} with R^{9'} being selected from the group consisting of: H and C1-C18 alkyl groups optionally substituted by one or more of -OH, -CO₂H, -SO₃H, -POsH, -OC(O)R¹⁰, -C(O)O-R¹⁰ groups or a 5 to 10 membered heterocycle ring comprising at least one nitrogen atom, R¹⁰ being selected from the group consisting of: C1-C6 alkyl groups or C6-C12 aryl groups, optionally substituted by one or more of -OH, -CO₂H, -SO₃H, -POsH groups.

Said heterocycle ring mentioned above in conjunction with monomer M1" can be saturated, unsaturated or aromatic; said heterocycle can be monocyclic or bicyclic; said heterocycle can be for example pyrrole, pyrrolidine, pyridine, piperidine, pyrimidine, pyrazine, 1,4-dihydropyridine, indole, oxindole, isatin, quinoline, isoquinoline, quinazoline, imidazoline, pyrazolidine, 2-pyrrolidone, deltalactame, succinimide, 2-imidazolidinone, 4-imidazolidinone; said heterocycle can optionally be substituted by one or more C1-C5 alkyl groups; as described above, the C1-C18 alkyl group is optionally substituted by said heterocycle ring, the latter can be bound to the C1-C18 alkyl groups by the nitrogen atom or any other atom forming the heterocycle; preferably the heterocycle is 2-pyrrolidone, delta-lactame, succinimide, 2-imidazolidinone, 4-imidazolidinone.

Preferably, the heterocycle ring is as defined above and in particular is 2-pyrrolidone, deltalactame, succinimide, 2-imidazolidinone, 4-imidazolidinone; and said substituent R^{9'} can be selected from the group consisting of: hydrogen, methyl, ethyl, propyl, *n*-butyl, *i*-butyl, *t*-butyl, *n-*dodecyl, amyl, isoamyl, hexyl, 2-ethylhexyl, lauryl, *n*-octyle, hydroxyethyl, hydroxybutyl, hydroxypropyl, 2-pyrrolidone, deltalactame, succinimide, 2-imidazolidinone, ethyl 4-imidazolidinone substituted by a ureido group.

More preferably, monomer M1" is R⁶R⁷C=C(R⁸)C(O)R⁹ in which R⁶ and R⁷ are H and R⁸ is H or CH₃, R⁹ is -OR^{9'} with R^{9'} being selected from the group consisting of: H and C1-C18 alkyl groups optionally substituted by one or more of -OH, -CO₂H, -SOsH, -POsH, -OC(O)R¹⁰, -C(O)O-R¹⁰ groups; R¹⁰ being selected from the group consisting of: C1-C6 alkyl groups or C6-C12 aryl groups, optionally substituted by one or more of -OH, -CO₂H, -SOsH, -POsH groups. More preferably, monomer M1" is R⁶R⁷C=C(R⁸)C(O)R⁹ in which R⁶, R⁷ are H, R⁸ is H or CH₃, R⁹ is -OR^{9'} with R^{9'} being selected from the group consisting of: H and C1-C15 alkyl groups optionally substituted by one or more of -OH, -CO₂H, -SOsH, -POsH, -OC(O)R¹⁰, -C(O)O-R¹⁰ groups; R¹⁰ being selected from the group consisting of: C1-C6 alkyl groups or C6-C12 aryl groups, optionally substituted by one or more of -OH, -CO₂H, -SOsH, -POsH groups. In particular, M1" may be R⁶R⁷C=C(R⁸)C(O)R⁹ in which R⁶, R⁷ are H, R⁸ is H or CH₃, R⁹ is -OR^{9'} with R^{9'} being selected from the group consisting of: H and C1-C10 alkyl groups optionally substituted by one or more of -OH, -CO₂H, -SOsH, -POsH, -OC(O)R¹⁰, -C(O)O-R¹⁰ groups; R¹⁰ being selected from the group consisting of: C1-C6 alkyl groups or C6-C12 aryl groups, optionally substituted by one or more of -OH, -CO₂H, -SOsH, -POsH groups.

Monomer M1" can in particular be: acrylic acid, methyl acrylate, ethyl acrylate, propyl acrylate, *n*-butyl acrylate, *i*-butyl acrylate, *t*-butyl acrylate, *n-*dodecyl acrylate, amyl acrylate, isoamyl acrylate, hexyl acrylate, 2-ethylhexyl acrylate, diacetone acrylamide, lauryl acrylate, *n*-octyl acrylate, hydroxypropyl methacrylate, hydroxybutyl acrylate, methyl acrylic acid, methyl methacrylate, ethyl methacrylate, propyl methacrylate, *n*-butyl methacrylate, isobutyl methacrylate, *t*-butyl methacrylate, *n*-dodecyl methacrylate, amyl methacrylate, isoamyl methacrylate, hexyl methacrylate, 2-ethylhexyl methacrylate, lauryl methacrylate, *n*-octyl methacrylate, ureido methacrylate, or a monomer of formula: CH₂=CHCO₂CH₂CH₂CO₂H, CH₂=CHCO₂CH₂CH₂-O-C(O)-CH₂CH₂CO₂H, CH₂=CHCO₂CH₂CH₂-O-C(O)-C₆H₄CO₂H, CH₂=CHCO₂CH₂CH₂CH₂CH(CO₂H)CH₂CH₂CO₂H. Among them, monomers having a C1-C8 alkyl group are preferred, and monomers having a C1-C5 alkyl group are even more preferred.

Combinations of at least two monomers M1' and/or at least two monomers M1" are also possible.

The polymer may comprise from 0.5 to 50 mol.% , preferably from 1 to 40 mol.% , more preferably from 2.5 to 30 mol.% , even more preferably from 3.5 to 25 mol.% , and most preferably from 4 to 20 mol.% of the first repeat unit derived from a monomer which is a compound of formula (I). In case at least two different compounds of formula (I) are used, the above proportions relate to the total amount of first repeat units derived from these compounds in the polymer.

The polymer may comprise the first repeat unit derived from a monomer which is a compound of formula (I) in an amount of from 0.05 to 2.5 mol.%, from 2.5 to 5 mol.%, from 5 to 7.5 mol.%, from 7.5 to 10 mol.%, from 10 to 12.5 mol.%, from 12.5 to 15 mol.%, from 15 to 17.5 mol.%, from 17.5 to 20 mol.%, from 20 to 22.5 mol.%, from 22.5 to 25 mol.%, from 25 to 27.5 mol.%, from 27.5 to 30 mol.%, from 30 to 32.5 mol.%, from 32.5 to 35 mol.%, from 35 to 37.5 mol.%, from 37.5 to 40 mol.%, from 40 to 42.5 mol.%, from 42.5 to 45 mol.%, from 45 to 47.5 mol.%, or from 47.5 to 50 mol.%.

The polymer may comprise a further repeat unit derived from VDF in an amount from 15 to 99.5 mol.%, preferably from 30 to 99 mol.%, more preferably from 50 to 98 mol.% and most preferably from 60 to 97 mol.%.

The polymer may comprise a further repeat unit derived from VDF in an amount from 15 to 20 mol.%, from 20 to 25 mol.%, from 25 to 30 mol.%, from 30 to 35 mol.%, from 35 to 40 mol.%, from 40 to 45 mol.%, from 45 to 50 mol., from 45 to 50 mol.%, from 50 to 55 mol.%, from 55 to 60 mol.%, from 60 to 65 mol.%, from 65 to 70 mol.%, from 70 to 75 mol.%, from 75 to 80 mol.%, from 80 to 85 mol.%, from 85 to 90 mol.%, from 90 to 95 mol.%, from 95 to 97.5 mol.% or from 97.5 to 99 mol.%.

The polymer may comprise one or more further repeat units derived from monomer(s) M1' in amount from 5 to 90 mol.%, preferably from 10 to 80 mol.%, more preferably from 15 to 75 mol.% and most preferably from 20 to 70 mol.%.

The polymer may comprise one or more further repeat units derived from monomer(s) M1' in an amount from 5 to 10 mol.%, from 10 to 15 mol.%, from 15 to 20 mol.%, from 20 to 25 mol.%, from 25 to 30 mol.%, from 30 to 35 mol.%, from 35 to 40 mol.%, from 40 to 45 mol.%, from 45 to 50 mol.%, from 45 to 50 mol.%, from 50 to 55 mol.%, from 55 to 60 mol.%, from 60 to 65 mol.%, from 65 to 70 mol.%, from 70 to 75 mol.%, from 75 to 80 mol.%, from 80 to 85 mol.%, from 85 to 90 mol.%.

The polymer may comprise one or more further repeat units derived from monomer(s) M1" from in an amount from 5 to 90 mol.%, preferably from 10 to 80 mol.%, more preferably from 15 to 75 mol.% and most preferably from 20 to 70 mol.%.

The polymer may comprise one or more further repeat units derived from monomer(s) M1" in an amount from 5 to 10 mol.%, from 10 to 15 mol.%, from 15 to 20 mol.%, from 20 to 25 mol.%, from 25 to 30 mol.%, from 30 to 35 mol.%, from 35 to 40 mol.%, from 40 to 45 mol.%, from 45 to 50 mol.%, from 45 to 50 mol.%, from 50 to 55 mol.%, from 55 to 60 mol.%, from 60 to 65 mol.%, from 65 to 70 mol.%, from 70 to 75 mol.%, from 75 to 80 mol.%, from 80 to 85 mol.%, from 85 to 90 mol.%.

The polymer may be a single further repeat unit derived from VDF.

The polymer may comprise one or more further repeat units being only derived from monomer(s) M1'.

The polymer may comprise one or more further repeat units being only derived from monomer(s) M1".

The polymer may comprise further repeat units derived from VDF and monomer(s) M1' only.

The polymer may comprise further repeat units derived from VDF and monomer(s) M1" only.

The polymer may comprise further repeat units derived from monomer(s) M1' and monomer(s) M1" only.

The polymer may comprise further repeat units derived from VDF, monomer(s) M1' and monomer(s) M1".

The polymer may comprise, or consist of:
- from 1 to 15 mol.% of the first repeat unit derived from a monomer which is a compound of formula (I), and
- from 85 to 99 mol.% of a further repeat unit derived from VDF. The polymer may comprise, or consist of:
- from 1 to 15 mol.% of the first repeat unit derived from a monomer which is a compound of formula (I),
- from 30 to 98 mol.% of a further repeat unit derived from VDF, and
- from 1 to 69 mol.% of one or more further repeat units derived from monomer(s) M1'.

The polymer may comprise, or consist of:
- from 1% to 15 mol.% of the first repeat unit derived from a monomer which is a compound of formula (I),
- from 30% to 98 mol.% of one or more further repeat units derived from VDF, and
- from 1% to 69 mol.% of one or more further repeat units derived from monomer(s) M1".

The polymer may comprise, or consist of:
- from 1% to 15 mol.% of the first repeat unit derived from a monomer which is a compound of formula (I), and
- from 85% to 99 mol.% of one or more further repeat units derived from monomer(s) M1'.

The polymer may comprise, or consist of:
- from 1% to 15 mol.% of the first repeat unit derived from a monomer which is a compound of formula (I), and
- from 85% to 99 mol.% of one or more further repeat units derived from monomer(s) M1".

The polymer may comprise, or consist of:
- from 1 to 15 mol.% of the first repeat unit derived from a monomer which is a compound of formula (I),
- from 30 to 97 mol.% of a further repeat unit derived from VDF,
- from 1 to 68 mol.% of one or more further repeat units derived from monomer(s) M1'
- from 1 to 68 mol.% of one or more further repeat units derived from monomer(s) M1".

The polymer may have a molar mass from 750 to 250000 g/mol, preferably from 1000 to 200000 g/mol, more preferably from 1250 to 150000 g/mol, even more preferably from 1500 to 100000 g/mol, even more preferably from 1750 to 75000 g/mol, and most preferably from 3000 to 50000 g/mol.

The polymer may have a molar mass ranging from 750 to 2500 g/mol, from 2500 to 5000 g/mol, from 5000 to 7500 g/mol, from 7500 to 10000 g/mol, from 10000 to 12500 g/mol, from 12500 to 15000 g/mol, from 15000 to 17500 g/mol, from 17500 to 20000 g/mol, from 20000 to 22500 g/mol, from 22500 to 25000 g/mol, from 25000 to 27500 g/mol, from 27500 to 30000 g/mol, from 30000 to 32500 g/mol, from 32500 to 35000 g/mol, from 35000 to 37500 g/mol, from 37500 to 40000 g/mol, from 40000 to 42500 g/mol, from 42500 to 45000 g/mol, from 45000 to 47500 g/mol, from 47500 to 50000 g/mol, from 50000 to 75000 g/mol, from 75000 to 100000 g/mol, from 100000 to 125000 g/mol, from 125000 to 150000 g/mol, from 150000 to 175000 g/mol, from 175000 to 200000 g/mol, from 200000 to 225000 g/mol, from 225000 to 250000 g/mol.

The molar mass is herein defined as a weight-average molar mass.

### Polymer preparation

The above polymer may be prepared via polymerization of compound of formula (I) and the one or more ethylenically unsaturated monomers as described above.

Preferably, the method for preparing the polymer may comprise:
- a first step of bringing the compound of formula (I) and a polymer initiator into contact;
- a second step of adding the one or more ethylenically unsaturated monomers.

Preferably, heating is carried upon or after adding the one or more ethylenically unsaturated monomers, for example at a temperature from 40 to 250°C, preferably from 60 to 200°C, more preferably from 70 to 130°C.

The polymerization may for example be implemented in an autoclave reactor. The duration of the polymerization may be for example from 1 to 50 hours, or from 2 to 40 hours, or from 3 to 30 hours, or from 4 to 20 hours.

If more than one ethylenically unsaturated monomers are used, they can all be added at the same time, or they can be added in a sequential manner.

The polymer initiator may be selected from the group consisting of:
- persulfate salts, for example sodium persulfate, potassium persulfate or ammonium persulfate, preferably in an amount from 0.005 to 1% by weight relative to the total amount of all monomers;
- peroxides, for example (substituted or unsubstituted) dialkyl peroxides such as di-*tert*-butyle peroxide, dicumyl peroxide or 2,5-dimethyl-2,5-di(*tert*-butylperoxy)hexane; (substituted or unsubstituted) alkyl hydroperoxides; peroxyesters such as *tert*-amyl peroxypivalate, *tert*-butyl peroxypivalate, dibenzoyl peroxide or succinic acid peroxide; (substituted or unsubstituted) peroxydicarbonates such as di-*n*-propyl peroxydicarbonate or diisopropyl peroxydicarbonate, preferably in an amount from 0.5 to 2.5% by weight relative to the total amount of all monomers;
- redox systems, a redox system being a system comprising a reducing and an oxidizing agents, the oxidizing agent being for example *tert*-butyl hydroperoxide, cumene hydroperoxide, ferric sulfate or potassium permanganate and the reducing agent being for example sodium hydroxymethanesulfinate dihydrate, sodium or potassium sulfite, bisulfite or metabisulfite, ascorbic acid, oxalic acid, and reduced metal salts, the redox systems being in an amount from 0.01 to 0.5% by weight relative to the total amount of all monomers;
- and their combinations.

### Applications

The above-described polymer may be used for example as a coating agent, as an electroactive material, or as antifouling, fouling release or antimicrobial material, notably for surface modification of reverse osmosis and nanofiltration membranes.

It may be used as a binder for an electrode, or as an electrolyte component, or as a separator material (for example as a coating on a separator) in battery cell, in particular a lithium- or sodium-based battery cell, in particular in a lithium-ion battery cell.

### Examples

### Example 1: synthesis of 2-(trifluoromethyl) acrylate ended oligo(2-ethyl-2-oxazoline) (PEtOx-MAF)

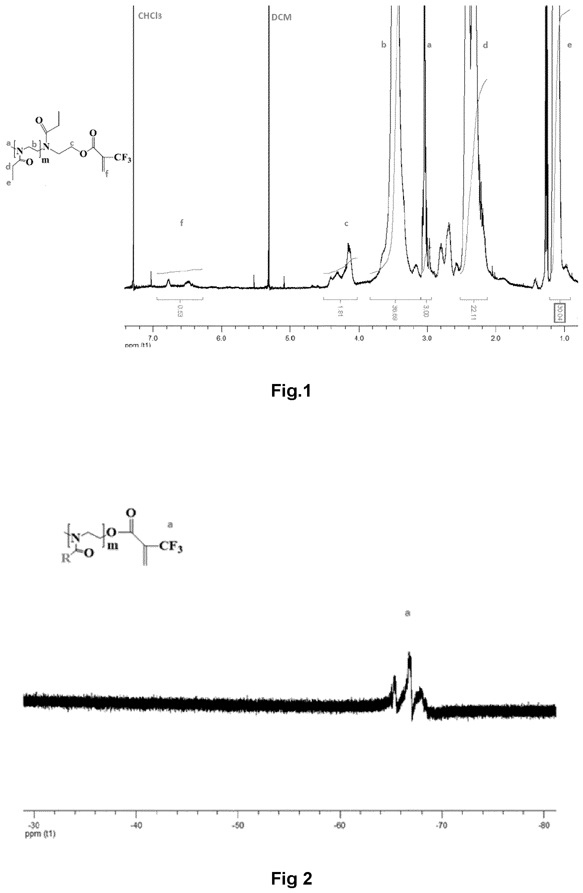

To a single 30 mL wide neck silicon carbide vessel with wide neck with one snap cap wide neck and one corresponding PTFE septum wide neck equipped with a magnetic stirring bar, methyl p-toluenesulfonate (0.923 g, 4.953 mmol) and 2-ethyl-2-oxazoline (5.0 mL, 49.53 mmol) were added and dissolved in 15 mL of anhydrous acetonitrile. After 15 min bubbling under nitrogen, the solution was vigorously stirred at 140°C for 1 h in a single mode microwave assisted reactor under a nitrogen atmosphere. The resulting polymer was then quenched by the quick addition of a solution of 2-(trifluoromethyl) acrylic acid (1.04 g, 7.43 mmol) and triethylamine (1.38 mL, 9.906 mmol). The flask was maintained at 80°C for 15 h in an oil bath. After cooling, the reaction mixture was concentrated, then dissolved in dichloromethane and washed with a saturated sodium hydrogen carbonate and brine solution (3 times). The organic phase was dried over anhydrous Na₂SO₄ and concentrated under reduced pressure and precipitated from chilled diethylether. The final product was dried overnight in an oven. The macromonomer PEtOx-MAF was isolated with a 83% yield, the molecular weight as calculated in ¹H-NMR was 1000 g/mol. The polymer, as a yellowish foam, was characterized by ¹H and ¹⁹F NMR spectroscopy (figures 1 and 2). ¹H-NMR (400 MHz, CDCl3, δ ppm, Fig. 1): 0.9 to 1.1 (3H, -N-CO-CH2-C**H₃**), 2.2 to 2.4 (2H, -N-CO-**CH₂**-CH₃), 2.9 to 3.1 (3H, -**CH₃**-N-CH₂-CH₂-), 3.3 to 3.5 (4H, -N-**CH₂-CH₂**), 4.1 to 4.4 (2H, -N-CH₂-**CH₂**-O-CO), 6.4 to 6.8 (2H, **CH₂**=C-). ¹⁹F-NMR (400 MHz, CDCl₃, δ ppm, Fig. 2): -64.0 to -68.0 (-C**F₃**).

### Example 2: radical copolymerization of VDF with 2-(trifluoromethyl) acrylate ended oligo(2-ethyl-2-oxazoline) (PEtOx-MAF)

The radical copolymerization of VDF with PEtOx-MAF was performed in a 100 mL-Hastelloy autoclave Parr system (HC 276), equipped with a manometer, a mechanical Hastelloy anchor, a rupture disk (3000 PSI), inlet and outlet valves and a Parr electronic controller (for regulating the stirring speed and heating).

A solution of potassium persulfate (0.515 g, 1.91 mmol), sodium triflinate (0.297 g, 1.91 mmol) and PEtOx-MAF (210 g/mol, 2.0 g, 9.55 mmol) in a mixture of 1% surfactant / H₂O (80 mL) was stirred and degassed by N₂ bubbling for 30 min. During this time, the autoclave was put under vacuum (40×10⁻³ bar) for 30 min to remove the residual traces of oxygen. The above solution was transferred into the autoclave under vacuum via a funnel tightly connected to the introduction valve of the autoclave. After this, the reactor was cooled in a liquid nitrogen bath and VDF was transferred through the autoclave inlet valve while monitoring its amount by double weighing (i.e., based on the difference of masses before and after filling the autoclave with VDF). The reactor was then allowed to warm to ambient temperature and then heated to the target reaction temperature (80°C) under mechanical stirring while the evolutions of pressure (Pₘₐₓ = 65 bar) and temperature were recorded. The reaction was stopped after 14 h. The autoclave was cooled in an ice bath for 30 minutes, then the unreacted gaseous monomer was purged off, followed by the opening of the vessel. The content of the autoclave was further poured into a round bottom flask where the solvent was completely removed under vacuum. The crude product was then dissolved in acetone and precipitated from chilled diethylether and pentane, respectively, and finally dried under vacuum (20 × 10⁻³ bar, 50°C) for 24 h. The obtained PVDF-g-Pox copolymer was isolated with a 62% yield.

Radical polymerizations were carried out with various initial VDF ratios using various PEtOx-MAF macromonomers with a molar mass of 350-800 g/mol (value calculated from ¹H-NMR) under the same conditions. Copolymers, as brown solids, were obtained with yields ranging between 45 and 65%.

### Example 3: radical copolymerization of VDF with 2-(trifluoromethyl) acrylate ended oligo(2-ethyl-2-oxazoline) (PEtOx-MAF)

The radical copolymerization of VDF with PEtOx-MAF was performed in a 100 mL-Hastelloy autoclave Parr system (HC 276), equipped with a manometer, a mechanical Hastelloy anchor, a rupture disk (3000 PSI), inlet and outlet valves and a Parr electronic controller (for regulating the stirring speed and heating).

In a similar procedure as example 2 above, a solution of 2,5-dimethyl-2,5-di(tert-butylperoxy)hexane (DTBPH) (0.290 g, 1.0 mmol), and PEtOx-MAF (1000 g/mol, 2.01 g, 2.0 mmol) in a mixture of acetonitrile (ACN) / water (27 mL ACN / 3 mL H₂O) was degassed by N₂ bubbling for 30 min. After the autoclave was set under vacuum (40×10⁻³ bar) for 30 min, the solution was transferred into the autoclave under vacuum. After cooling the vessel, VDF was introduced into the autoclave by double weighing. The reactor was warmed to room temperature and then heated to 115°C under stirring whereas the evolutions of pressure (Pmax = 32 bar) and temperature were recorded. After 14 h, the reaction was stopped, the autoclave was cooled and the unreacted VDF was purged off followed by the opening of the vessel. The same purification was applied as in example 2 above. The obtained PVDF-g-POx copolymer, as a brown solid, was isolated with a 25% yield.

Similar radical polymerizations were also carried out with different VDF ratios using PEtOx-MAF with a molar mass of 500 g/mol in the same conditions. Copolymers were obtained with yields between ranging from 35 to 50%.

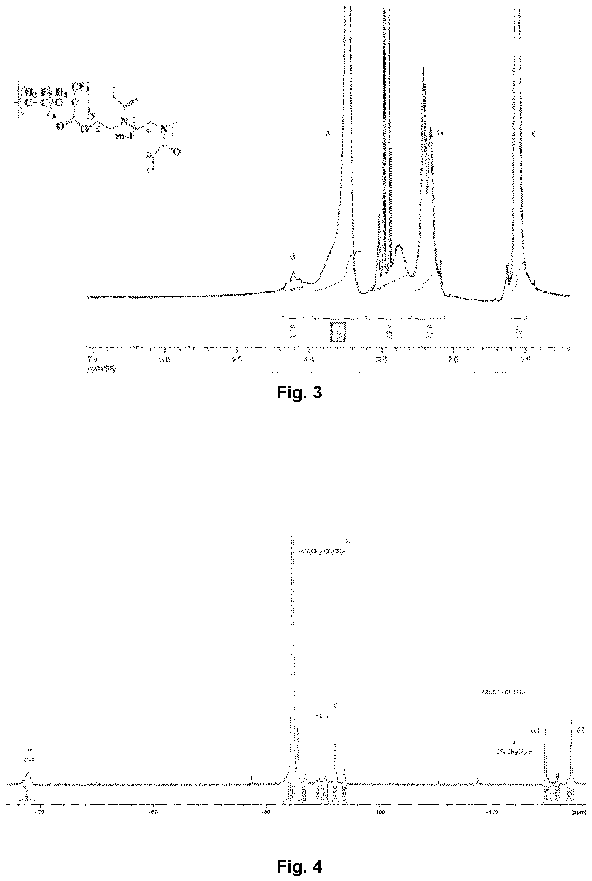

The copolymer, as a brown solid, was characterized by ¹H and ¹⁹F NMR spectroscopy (Figures 3 and 4). ¹H-NMR (400 MHz, Acetone-d₆, δ ppm, Fig. 3): 0.9 to 1.1 (3H, -N-CO-CH2-C***H*₃**), 2.15 to 2.4 (4H, -C***F₂***CH₂-CH₂C***F₂***- reverse VDF-VDF T-T addition), 2.2 to 2.4 (2H, -N-CO-C***H*2**-CH₃), 2.6 to 3.2 (4H,-CH₂C***F₂***-CH₂C***F₂***-, normal VDF-VDF H-T addition), 3.3 to 3.5 (4H, -N-C***H₂***-C***H₂***), 4.1 to 4.2 (2H, -N-CH₂-C***H₂***-O-CO). ¹⁹F-NMR (400 MHz, Acetone-d₆, δ ppm, Fig. 4): -68.0 to -69.0 (-C***F₃***), -91.50 to -93.50 (-CH₂C***F₂***-CH₂C***F₂***-normal VDF-VDF H-T addition), -96.1 (-C***F₂*** of VDF in the VDF-POx dyad), -114.3 (-CH₂C***F₂***-CF₂CH₂-CH₂, reverse VDF-VDF H-H addition), -115.7 (CF₂-CH₂C***F₂***-H, chain-end from transfer or back biting); -117.2 (-CH₂CF₂-C***F₂***CH₂-CH₂, reverse VDF-VDF H-H addition).

From the integral ratio of the intensities of the characteristic signals in the NMR spectrum, the molar % of VDF in the copolymer was 97%.

## Claims

1. A compound of formula (I), wherein said formula (I) is as follows: 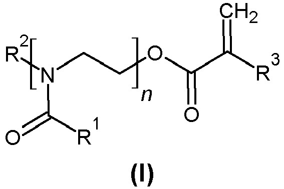
wherein R¹ is selected from the group consisting of: linear, branched and cyclic alkyl groups; aromatic groups; linear, branched and cyclic alkenyl groups;
wherein R² is selected from the group consisting of: linear, branched and cyclic alkyl groups with or without one or more substituents; linear, branched and cyclic alkenyl groups with or without one or more substituents; linear, branched and cyclic alkynyl groups with or without one or more substituents;
the substituents being selected from halogen atoms; aromatic groups; heterocyclic groups; carboxylic acid groups; amide-containing groups; ester-containing groups; and ether-containing groups;
wherein R³ is selected from the group consisting of: hydrogen, halogens and partially or fully halogenated alkyl groups;
wherein n is at least 1.

2. The compound of formula (I) according to claim 1, wherein R¹ is a methyl group, an ethyl group, a propyl group, an isopropyl group or a *n-*butyl group.

3. The compound of formula (I) according to any one of claims 1 and 2 wherein R² is a methyl group, an allyl group, a propargyl group, a benzyl group, a perfluoroalkyl group, or an alkylepoxide group.

4. The compound of formula (I) according to any one of claims 1 to 3, wherein R³ is fluorine, a perfluoroalkyl having 1 to 8 carbon atoms, or CCl₃.

5. The compound of formula (I) according to any one of claims 1 to 4, having a molar mass from 200 to 25000 g/mol, more preferably from 210 to 20000 g/mol, even more preferably from 220 to 15000 g/mol, even more preferably from 230 to 10000 g/mol, even more preferably from 240 to 7500 g/mol, and most preferably from 250 to 5000 g/mol.

6. The compound of formula (I) according to any one claims 1 to 5, wherein n is from 1 to 500, preferably from 2 to 400, more preferably from 3 to 300, even preferably from 4 to 200 and most preferably from 5 to 100.

7. A method for preparing the compound of formula (I) according to any one of claims 1 to 6, comprising:
- an initiation reaction between an oxazoline of formula (II) and an initiator of formula R²-X to obtain an intermediate compound; 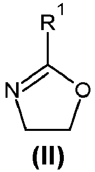 wherein X is selected from the group consisting of halogens such as Cl, Br or I and sulfonyls such as tosyl, brosyl, nosyl, mesyl or triflyl;
- a termination reaction between the intermediate compound and a terminating agent of formula (III) to obtain the compound of formula (I), 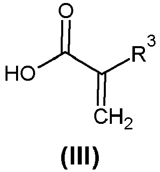 wherein R¹, R², and R³ are as defined in any one of claims 1 to 6.

8. The method according to claim 7, wherein the oxazoline of formula (II) is selected from the group of 2-methyl-2-oxazoline, 2-ethyl-2-oxazoline, 2-butyl-2-oxazoline, 2-isopropyl-2-oxazoline or 2-phenyl-2-oxazoline.

9. The method according to claim 7 or 8, wherein the initiator of formula R²-X is selected from the group consisting of: methyl *p-*toluenesulfonate, allyl *p*-toluenesulfonate, allyl bromide, propargyl *p-*toluenesulfonate, propargyl bromide, benzyl *p*-toluenesulfonate, 2-oxiranylmethyl trifluoromethanesulfonate or (2,2-dimethyl-1,3-dioxolan-4-yl)methyl trifluoromethanesulfonate.

10. The method according to any one of claims 7 to 9, wherein the terminating agent of formula (III) is selected from the group consisting of: acrylic acid and its derivatives, for example, 2-fluoroacrylic acid, methacrylic acid, 2-(trichloromethyl)acrylic 2-(trifluoromethyl)acrylic acid, 2-(difluoromethyl)acrylic acid, 2-(monofluoromethyl)acrylic acid, 3,3,4,4,4-pentafluoro-2-methylenebutanoic acid; and preferably the terminating agent of formula (III) is 2-(trifluoromethyl)acrylic acid.

11. A polymer comprising:
- a first repeat unit derived from a monomer which is a compound of formula (I) according to any one of claims 1 to 6,
- one or more further repeat units, each further repeat unit being derived from an ethylenically unsaturated monomer.

12. The polymer according to claim 11, wherein the one or more further repeat units are derived from VDF and optionally derived from a monomer M1' and/or derived from a monomer M1", wherein:
- monomer M1' is selected from the group consisting of: vinyl fluoride; trifluoroethylene (VF₃); chlorotrifluoroethylene (CTFE); 1,2-difluoroethylene; tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE), perfluoro(propylvinyl)ether (PPVE), perfluoro(1,3-dioxole), perfluoro(2,2-dimethyl-1,3-dioxole) (PDD); compounds of formula CF₂=CFOCF₂CF(CF₃)OCF₂CF₂X in which X is SO₂F, CO₂H, CH₂OH, CH₂OCN or CH₂PO₃H; the compound of formula CF₂=CFOCF₂CF₂SO₂F; the compound of formula F(CF₂)_{b}CH₂OCF=CF₂ in which b is 1, 2, 3, 4 or 5; the compound of formula R⁴CH₂OCF=CF₂ in which R⁴ is hydrogen or F(CF₂)_{c} and c is 1, 2, 3 or 4; the compound of formula R⁵OCF=CH₂ in which R⁵ is F(CF₂)_{d} and d is 1, 2, 3 or 4; perfluorobutyl ethylene (PFBE); 3,3,3-trifluoropropene; 2,3,3,3-tetrafluoropropene; hexafluoroisobutylene; perfluorobutylethylene; pentafluoropropene, bromotrifluoroethylene, chlorofluoroethylene, chlorotrifluoropropene and 2-trifluoromethyl-3,3,3-trifluoro-1-propene and combinations thereof;
- monomer M1" is selected from the group consisting of: R⁶R⁷C=C(R⁸)C(O)R⁹ in which R⁶, R⁷ and R⁸ are independently selected from the group consisting of: H and C1-C5 alkyl groups; R⁹ is selected from the group consisting of: -NHC(CH₃)₂CH₂C(O)CH₃ or -OR^{9'} with R^{9'} being selected from the group consisting of: H and C1-C18 alkyl groups optionally substituted by one or more of -OH, -CO₂H, -SOsH, -POsH, -OC(O)R¹⁰, -C(O)O-R¹⁰ groups or a 5 to 10 membered heterocycle ring comprising at least one nitrogen atom, R¹⁰ being selected from the group consisting of: C1-C6 alkyl groups or C6-C12 aryl groups, optionally substituted by one or more of -OH, -CO₂H, -SOsH, -POsH groups.

13. The polymer according to any one of claims 11 to 12, comprising:
- from 1 to 50 mol.% of the first repeat unit;
- from 50 % to 99 mol.% of the one or more further repeat units.

14. A method for preparing the polymer of any one claims 11 to 13, comprising polymerizing the compound of formula (I) according to any one of claims 1 to 6 and the one or more ethylenically unsaturated monomers, the method preferably comprising:
- a first step of bringing the compound of formula (I) according to any one of claims 1 to 6 and a polymer initiator into contact;
- a second step of adding the one or more ethylenically unsaturated monomers.

15. The use of the polymer according to claims 11 to 13 as a coating agent, as an electroactive material, or as antifouling, fouling release or antimicrobial material, notably for surface modification of reverse osmosis and nanofiltration membranes, as a binder for an electrode, as an electrolyte component, or as a separator material in a battery cell.
